# EUROPÄISCHE PATENTSCHRIFT

(11) **EP 2 929 578 B1**
(45) Veröffentlichungstag und Bekanntmachung des Hinweises auf die Patenterteilung: **08.03.2017**
(21) Anmeldenummer: 13821086.9
(22) Anmeldetag: 19.12.2013
(51) Int. Cl.: H01M 10/04, H01M 10/617, H01M 2/02, H01M 10/39, H01M 10/6554, H01M 10/613

(54) **FORMANGEPASSTE ELEKTROCHEMISCHE SPEICHEREINRICHTUNG FÜR EINE GLEICHMÄSSIGE TEMPERATURVERTEILUNG**
FORM-ADAPTED ELECTROCHEMICAL STORAGE DEVICE FOR EQUAL TEMPERATURE DISTRIBUTION
DISPOSITIF DE STOCKAGE ÉLECTROCHIMIQUE À FORME ADAPTÉE POUR UNE DISTRIBUTION EGALE DE LA TEMPERATURE

(30) Priorität: 08.01.2013 EP 13150480
(43) Veröffentlichungstag der Anmeldung: 14.10.2015
(73) Patentinhaber: Siemens Aktiengesellschaft, 80333 München (DE)
(72) Erfinder: KÜHNE, Michael, 90762 Fürth (DE); MENAPACE, Wolfgang, 91052 Erlangen (DE)
(86) Internationale Anmeldenummer: PCT/EP2013/077303
(87) Internationale Veröffentlichungsnummer: WO 2014/108291

(56) Entgegenhaltungen:
- EP-A1- 2 541 646
- WO-A1-2013/048706
- WO-A2-2008/079563
- DE-A1- 19 625 424
- JP-A- H08 329 980
- US-A1- 2010 178 546

## Beschreibung

Die vorliegende Erfindung betrifft eine elektrochemische Speichereinrichtung, welche einen mit einem Anodenmaterial befüllten Anodenraum aufweist, sowie mit einem Kathodenmaterial befüllten Kathodenraum, wobei der Anodenraum von dem Kathodenraum durch einen Ionen leitenden Festkörperelektrolyten getrennt ist, und wobei der Anodenraum zu einer Seite wenigstens teilweise durch den Festkörperelektrolyten begrenzt ist, und zu einer anderen Seite wenigstens teilweise von einer den Festkörperelektrolyten wenigstens teilweise umgebenden Wandung, wobei die elektrochemische Speichereinrichtung ein Kopfteil aufweist, an welchem elektrische Energie zu- bzw. abgeführt werden kann, ein dem Kopfteil gegenüber angeordnetes Fußteil, und mindestens ein die wenigstens eine Wandung umfassendes Seitenteil, welches zwischen Kopfteil und Fußteil angeordnet ist. Weiterhin betrifft die Erfindung ein Verfahren zur Herstellung einer solchen elektrochemischen Speichereinrichtung.

Die vorliegend beschriebene und beanspruchte elektrochemische Speichereinrichtung ist als Hochtemperatur-Speichereinrichtung ausgebildet, welche eine Mindesttemperatur von wenigstens 100 °C als Betriebstemperatur erfordert. Insbesondere beträgt die Betriebstemperatur zwischen 200 °C und 350 °C, wobei die Betriebstemperatur derart hoch sein muss, damit der von der elektrochemischen Speichereinrichtung umfasste Festkörperelektrolyt ausreichend Ionen leitend wird, um einen möglichst geringen Innenwiderstand für die elektrochemische Speichereinrichtung aufzuweisen. Höhere Betriebstemperaturen, etwa bis 500°C, sind ebenfalls denkbar. Typische von der Erfindung betroffene elektrochemische Speichereinrichtungen sind diejenigen, die bspw. auf der Technologie von Natrium-Nickel-Chlorid-Zellen (NaNiCl₂-Zellen) bzw. von Natrium-Schwefel-Zellen (NaS-Zellen) basieren. Hierbei sind unterschiedliche Ausführungsformen dieser Zellen bekannt.

Der Aufbau einer herkömmlichen elektrochemischen Speichereinrichtung, die auf der Technologie von Natrium-Nickel-Chlorid-Zellen basiert, weist eine bei Entladebetrieb als Anode ausgebildete negative Elektrode auf, deren Anodenmaterial bei Betriebstemperatur als flüssiges Natrium vorliegt. Dieses füllt bei Betrieb typischerweise einen Teil des Anodenraums aus. Die positive Elektrode beim Entladebetrieb, die als Kathode ausgebildet ist, weist einen Kathodenraum auf, der wenigstens teilweise von einem geeigneten Metall, etwa Nickel, in Mischung mit einem ebenfalls geeigneten Salz, etwa NaCl, sowie etwa weiteren geeigneten Zusätzen, wie z.B. AlCl₃ oder NaAlCl₄, angefüllt ist. Das Gemisch dieser Stoffe liegt bei Betriebstemperatur der elektrochemischen Speichereinrichtung typischerweise wenigstens teilweise als flüssiger Elektrolyt vor.

Anodenraum und Kathodenraum sind von einem Festkörperelektrolyten getrennt, der als keramischer Separator lediglich für Ionen durchlässig ist. Einen anderen Stoffaustausch als den von Ionen soll der Festkörperelektrolyt nicht zulassen. Typische Festkörperelektrolyten, die in Natrium-Nickel-Chlorid-Zellen eingesetzt werden, umfassen β-Al₂O₃ bzw. β"-Al₂O₃ als keramisches Material. Dieses erlaubt eine spezifische Ionenleitfähigkeit für Na⁺-Ionen, die zwischen Anodenraum und Kathodenraum je nach Potentialgefälle durch den Festkörperelektrolyten transportiert werden können. Die beim Ladebetrieb bzw. Entladebetrieb ablaufenden Reaktionen ergeben sich bspw. aus der nachfolgenden Reaktionsgleichung (Entladebetrieb, von links nach rechs; Ladebetrieb von rechts nach links):

2 Na + NiCl₂ - 2 NaCl + Ni

Im Gleichgewichtszustand kann sich so eine Spannung von etwa 2,58V zwischen Anode und Kathode aufbauen.

Um die für diesen Ionenaustausch zugängliche aktive Oberfläche des an den Festkörperelektrolyten anliegenden Anodenmaterials zu vergrößern, werden typischerweise Federbleche in dem Anodenraum angeordnet, die teilweise an dem Festkörperelektrolyten und teilweise an der diesen Festkörperelektrolyten umgebenden Wandung anliegen. Die Federbleche sind von dem Festkörperelektrolyten im Mittel lediglich nur geringfügig beabstandet, so dass bei Betriebstemperaturen, bei welchen das Anodenmaterial in flüssiger Phase vorliegt, dieses durch Kapillarwirkung zwischen dem Festkörperelektrolyten und dem Federblech derart gegen die Gravitationswirkung bewegt wird, dass es über dem bei Betrieb vorliegenden Füllstandspegel in dem Anodenraum liegt. Selbst bei einem verhältnismäßig geringen Füllstand der elektrochemischen Speichereinrichtung mit Anodenmaterial ist es insofern möglich, die aktive Oberfläche des an dem Festkörperelektrolyten in Kontakt gebrachten Anodenmaterials zu vergrößern. Infolgedessen kommt es zu einer ausreichenden Benetzung des Festkörperelektrolyten auch oberhalb der Füllstandsfläche des restlichen Anodenmaterials im Anodenraum, wobei bei Betrieb der elektrochemischen Speichereinrichtung so eine Senkung des Innenwiderstands der Speichereinrichtung die Folge ist.

Konstruktionsbedingt kann jedoch trotz dieser technischen Vorkehrungen nicht gewährleistet werden, dass der so mit dem Festkörperelektrolyten in Kontakt gebrachte Film des Anodenmaterials eine ausreichend gleichmäßige Dickenverteilung aufweist. Insofern kommt es bei Stromfluss im Lade- wie auch im Entladebetrieb mitunter zu Inhomogenitäten der Wärmeverteilung über den mit dem Anodenmaterial benetzten Bereich des Festkörperelektrolyten. Je nach Füllstandspegel in dem Anodenraum wird nämlich bei betriebsgemäßer Orientierung der elektrochemischen Speichereinrichtung im Fußbereich die Wärme von dem Festkörperelektrolyten über das flüssige Metall nach außen zum Seitenteil hin abgeleitet, wobei im Bereich des Kopfteils der elektrochemischen Speichereinrichtung aufgrund der nicht vollständigen Ausfüllung des Anodenraums mit Anodenmaterial die Wärmeableitung nur über den ansonsten noch mit Gas gefüllten oberen Bereich des Anodenraums abgeleitet werden kann. Im Fußbereich ist somit eine direkte durch das flüssige Metall vermittelte Wärmeleitung nach außen zum Seitenteil möglich, die deutlich günstiger ist als die indirekte Wärmeleitung im Kopfbereich, die über einen Gasbereich vermittelt wird.

Bei hoher elektrischer Belastung der elektrochemischen Speichereinrichtung können sich somit ungewünschte Temperaturgradienten ausbilden, die zu mechanischen Spannungen in dem Festkörperelektrolyten führen. Derartige Spannungen beeinflussen wiederum die Lebensdauer der elektrochemischen Speichereinrichtung nachteilig. So ist es bspw. bekannt, dass insbesondere thermisch stark beanspruchte elektrochemische Speichereinrichtungen eine deutlich kürzere Zyklenlebensdauer aufweisen, als solche Speichereinrichtungen, die bei geringerer Stromdichte zum Auf- bzw. Entladen betrieben werden. Dies schränkt jedoch die für vorbestimmte Anwendungen erreichbaren Leistungsdichten der elektrochemischen Speichereinrichtungen in unerwünschtem Maß ein und vermindert gleichzeitig auch die Flexibilität und Einsatzfähigkeiten von auf dieser Technologie basierender Speichereinrichtungen.

Kommt es bspw. in einem mit solchen elektrochemischen Speichereinrichtungen versehenen Modul zum Ausfall einer davon umfassten Speichereinrichtung, hat sich gezeigt, dass der überwiegende Anteil solcher Ausfälle auf einen elektrischen Kurzschluss innerhalb der elektrochemischen Speichereinrichtung zurückzuführen ist. In Folge kommt es mitunter zur direkten Reaktion des Anodenmaterials mit dem Kathodenmaterial bzw. zum Zusammenbruch des Potentialgefälles, da der Festkörperelektrolyt nach Beschädigung nunmehr einen weitgehenden, im Wesentlichen freien Stoffaustausch zulässt bzw. eine elektrisch leitende Kurzschlussverbindung ausgebildet wird. Durch den elektrochemischen Kurzschluss in der Speichereinrichtung ist diese nicht mehr in der Lage, etwa einen Anteil zur Gesamtspannung des Moduls beizutragen, in welchem die Speichereinrichtung verschaltet ist, wodurch die Gesamtspannung des Moduls sinkt. Bei Reihenschaltung einzelner elektrochemischer Speichereinrichtungen im Modul führt dies lediglich zu klar vorhersehbaren Abfällen der Gesamtspannung. Bei Parallelschaltung mehrerer Module können sich jedoch Mischpotentiale einstellen, die die durch Ausfall einzelner elektrochemischer Speichereinrichtungen vorgeschädigten Module höheren Lade- bzw. Entladestromdichten aussetzen, so dass sich mitunter bereits bestehende Schäden in einzelnen elektrochemischen Speichereinrichtungen zusätzlich noch verschlechtern können. Eine Folge wäre ein zunehmender Ausfall einzelner elektrochemischer Speichereinrichtungen in dem bereits vorgeschädigten, also in dem mit einem oder mehreren bereits kurzgeschlossenen Speichereinrichtungen versehenen Modul sowie damit einhergehend der Ausfall des gesamten Moduls am Ende. Eine weitere Folge wäre die stetige Abnahme der nutzbaren Speicherkapazität der zusammen geschalteten Module, da Module ohne ausgefallene Speichereinrichtungen aufgrund der sich einstellenden Mischpotenziale nur noch teilweise geladen bzw. entladen würden.

Aufgabe der vorliegenden Erfindung ist es nun, eine elektrochemische Speichereinrichtung vorzuschlagen, die diese Nachteile aus dem Stand der Technik vermeiden kann. Insbesondere soll eine elektrochemische Speichereinrichtung vorgeschlagen werden, die eine vorteilhafte Kühlung bzw. Wärmeabfuhr einer solchen elektrochemischen Speichereinrichtung zulässt. Weiterhin ist es wünschenswert, eine möglichst gleichmäßige Wärmeabführung der im Kontaktbereich zwischen Festkörperelektrolyt und Anodenmaterial entstehenden Wärme nach außen zum Seitenteil hin zu erreichen. Hierbei sollten Temperaturgradienten weitgehend vermieden werden. Weiterhin ist es wünschenswert, Bauteile für herkömmliche elektrochemische Speichereinrichtungen unter nur geringem Aufwand zu verwenden, um damit eine Ausführungsform bereit stellen zu können, welche eine solche vorteilhafte Wärmeableitung zum Seitenteil hin aufweist. Ebenfalls ist es Aufgabe der vorliegenden Erfindung ein Verfahren zur Herstellung einer solchen elektrochemischen Speichereinrichtung vorzuschlagen.

Erfindungsgemäß werden diese der Erfindung zugrunde liegenden Aufgaben durch eine elektrochemische Speichereinrichtung gemäß Anspruch 1 sowie Verfahren zur Herstellung einer solchen elektrochemischen Speichereinrichtung gemäß Anspruch 14 und 15 gelöst.

Insbesondere werden diese der Erfindung zugrunde liegenden Aufgaben durch eine elektrochemische Speichereinrichtung gelöst, welche bei regulärem Betrieb einen mit einem Anodenmaterial befüllten Anodenraum aufweist, sowie mit einem Kathodenmaterial befüllten Kathodenraum, wobei der Anodenraum von dem Kathodenraum durch einen Ionen leitenden Festkörperelektrolyten getrennt ist, und wobei der Anodenraum zu einer Seite wenigstens teilweise durch den Festkörperelektrolyten begrenzt ist, und zu einer anderen Seite wenigstens teilweise von einer dem Festkörperelektrolyten umgebenden Wandung, wobei die elektrochemische Speichereinrichtung ein Kopfteil aufweist, an welchem elektrische Energie zu- bzw. abgeführt werden kann, ein dem Kopfteil gegenüber angeordnetes Fußteil, und mindestens ein die wenigstens eine Wandung umfassendes Seitenteil, welches zwischen Kopf- und Fußteil angeordnet ist, wobei zwischen Wandung und Festkörperelektrolyten wenigstens ein erster Bereich und ein zweiter Bereich ausgebildet sind, welche beiden Bereiche sich durch die jeweilige Beabstandung der Wandung von dem Festkörperelektrolyten unterscheiden.

Weiterhin sind die der Erfindung zugrunde liegenden Aufgaben gelöst durch ein Verfahren zum Herstellen einer elektrochemischen Speichereinrichtung, insbesondere einer solchen vorab beschriebenen wie auch nachfolgend beschriebenen elektrochemischen Speichereinrichtung, welches folgende Schritte umfasst:
- Bereitstellen eines Ionen leitenden Festkörperelektrolyten;
- Bereitstellen einer Wandung;
- Umformen der Wandung und
- Umgeben des Festkörperelektrolyten mit der umgeformten Wandung derart, dass zwischen Wandung und Festkörperelektrolyten bei Fertigstellung der elektrochemischen Speichereinrichtung wenigstens ein erster Bereich eines Anodenraums und ein zweiter Bereich eines Anodenraums ausgebildet sind, welche beiden Bereiche sich jeweils durch die Beabstandung der Wandung von dem Festkörperelektrolyten unterscheiden.

Weiterhin sind die der Erfindung zugrunde liegenden Aufgaben gelöst durch ein Verfahren zur Herstellung einer solchen elektrochemischen Speichereinrichtung, insbesondere einer wie vorab wie auch nachfolgend beschriebenen elektrochemischen Speichereinrichtung, welches folgende Schritte umfasst:
- Bereitstellen eines eine Formänderung aufweisenden, sowie Ionen leitenden Festkörperelektrolyten;
- Bereitstellen einer Wandung;
- Umgeben des Festkörperelektrolyten mit der Wandung derart, dass zwischen Wandung und Festkörperelektrolyten bei Fertigstellung der elektrochemischen Speichereinrichtung wenigstens ein erster Bereich eines Anodenraums und ein zweiter Bereich eines Anodenraums ausgebildet sind, welche beiden Bereiche sich jeweils durch die Beabstandung der Wandung von dem Festkörperelektrolyten unterscheiden.

Gemäß einer typischen und vorteilhaften Ausführungsform der elektrochemischen Speichereinrichtung, die auf der Technologie einer Natrium-Nickel-Chlorid-Zellen basiert, ist das Anodenmaterial Natrium.

Gemäß einer Ausführungsform, bei welcher die elektrochemische Speichereinrichtung auf der Technologie einer Natrium-Nickel-Chlorid-Zelle basiert, ist das Kathodenmaterial typischerweise eine Mischung eines Metalls (Ni) mit wenigstens einem Salz (NaCl) und typischerweise wenigstens einem weiteren Zusatzstoff (z.B. AlCl₃ bzw. NaAlCl₄). Die Mischung des Salzes bzw. des Zusatzstoffes liegen wenigstens teilweise bei Betriebstemperatur als flüssige Elektrolytschmelze vor.

Der Festkörperelektrolyt erlaubt erfindungsgemäß den Austausch von Ionen zwischen Anodenraum und Kathodenraum. Davon ist jedoch kein Stoffaustausch mit umfasst, der etwa als Fluidaustausch bzw. Festkörperaustausch verstanden werden kann. Weiterhin ist der Festkörperelektrolyt typischerweise selektiv für die Leitung bestimmter Ionen des Anodenmaterials ausgebildet. Gemäß der Technologie einer Natrium-Nickel-Chlorid-Zellen ist der Festkörperelektrolyt selektiv leitfähig für Na⁺-Ionen. Je nach Ausführungsform kann dieser aber auch für andere Ionenarten selektiv leitfähig sein, etwa für Li⁺- oder K⁺- Ionen.

Das Kopfteil der elektrochemischen Speichereinrichtung dient neben einem Abschluss der Speichereinrichtung auch der elektrischen Kontaktierung der Speichereinrichtung mit elektrischen Leitungen, um elektrische Energie zu- bzw. abzuführen. Das Fußteil dient hierbei typischerweise bei betriebsgemäßer Orientierung der Speichereinrichtung zur Abstützung der Speichereinrichtung gegen eine nicht weiter bezeichnete Fläche.

Es ist darauf hinzuweisen, dass die erfindungsgemäße Beabstandung von Festkörperelektrolyt und Wandung die mittlere Beabstandung von beiden betrifft. Diese lässt sich leicht auf der Grundlage herkömmlicher Mittelungsverfahren bestimmen. So kann bspw. die Beabstandung der Wandung von dem Festkörperelektrolyten durch eine durch die Wandung und den Festkörperelektrolyten verlaufende Gerade bestimmt werden, wobei die Schnittpunkte die jeweilige Beabstandung angeben. Hierbei verläuft die Gerade bspw. senkrecht zur Oberfläche des Festkörperelektrolyten bzw. senkrecht zur diesen umgebenden Wandung. Die mittlere Beabstandung ergibt sich bspw. aus einer repräsentativen Anzahl an einzeln bestimmten Beabstandungen, die einzelnen Punkten über den ersten bzw. zweiten Bereich der elektrochemischen Speichereinrichtung zugeordnet sind. Um die mittlere Beabstandung aus diesen Einzelbeabstandungen zu berechnen, können diese summiert werden, wobei das Ergebnis durch die Anzahl an Einzelbeabstandungen geteilt wird. Insbesondere kann eine integrative Mittelung erfolgen, die auch gewichtet erfolgen kann. Die Bestimmungsmethode kann auch ausführungsgemäß unterschiedliche Bestimmungen kombinieren.

An dieser Stelle soll auch darauf hingewiesen werden, dass für den Fall, dass eine beschriebene technische Wirkungsweise einzelner technischer Merkmale von der Orientierung der elektrochemischen Speichereinrichtung im Raum abhängig sein sollte, davon ausgegangen werden soll, dass die Orientierung relativ zum Gravitationsfeld der Erde wie bei Betrieb der Speichereinrichtung zu bestimmen ist. Demgemäß ist das Fußteil der elektrochemischen Speichereinrichtung dem Erdkern näher zugeordnet als das Kopfteil. Die Orientierung ist zudem derart, dass die Verbindung zwischen Kopfteil und Fußteil im Wesentlichen parallel zum Verlauf des Graviationsfeldes angeordnet ist.

Die Erfindungsidee basiert auf dem Umstand, dass die elektrochemische Speichereinrichtung einen ersten Bereich aufweist, bei welchem der Festkörperelektrolyt von der Wandung eine unterschiedliche Beabstandung aufweist als im zweiten Bereich. Befindet sich im Anodenraum während des Betriebs der elektrochemischen Speichereinrichtung Anodenmaterial, so ergibt sich aufgrund dieser unterschiedlichen Beabstandung ein im Vergleich zur aus dem Stand der Technik bekannten elektrochemischen Speichereinrichtung unterschiedlicher Füllstand und Benetzungsgrad der Oberfläche des Festkörperelektrolyten. Wird bspw. der erste Bereich derart ausgebildet, dass zwischen Wandung und Festkörperelektrolyten ein geringerer Abstand vorherrscht als im zweiten Bereich, wobei der erste Bereich bei bestimmungsgemäßer Nutzung der elektrochemischen Speichereinrichtung in Bezug auf den Erdkern diesem näher angeordnet ist, kann auch bei bereits geringerer Menge an Anodenmaterial in dem Anodenraum ein höherer Füllstand erreicht werden. Dieser Füllstand sorgt gleichzeitig für eine verbesserte Benetzung des Festkörperelektrolyten bzw. für eine verbesserte Wärmeabfuhr, da nun das Anodenmaterial im ersten Bereich des Anodenraums eine direkte Wärmeableitung ermöglicht.

Aufgrund der unterschiedlichen Beabstandung von Wandung und Festkörperelektrolyten im ersten Bereich und im zweiten Bereich kann somit gezielt für vorbestimmte Lade- bzw. Entladezustände der elektrochemischen Speichereinrichtung der Füllstandspegel der Speichereinrichtung vorteilhaft beeinflusst werden. Bei geeigneter Wahl der Beabstandung von Wandung und Festkörperelektrolyten kann insbesondere auch auf das Vorsehen von den oben beschriebenen Federblechen verzichtet werden, wodurch ein fertigungstechnischer Kostenvorteil entsteht. Demgemäß vermag die erfindungsgemäße elektrochemische Speichereinrichtung bereits bei einem geringen Ladezustand der Speichereinrichtung schon für eine ausreichend gute Benetzung des Festkörperelektrolyten mit dem Anodenmaterial zu sorgen, um insbesondere bei Betrieb eine gleichmäßige Wärmeverteilung und Wärmeableitung gewährleisten zu können. Demgemäß kann bei gleicher elektrischer Belastung die Lebensdauer der elektrochemischen Speichereinrichtung verlängert werden bzw. die Leistungstoleranz bei unveränderter Lebensdauer kann erhöht werden.

Statt der beschriebenen Federbleche können diese nunmehr als einfacher ausgeführte, im Wesentlichen die Speichereinrichtung vor mechanischen Einwirkungen schützende Federelemente ausgeführt werden. Die Federelemente erfordern zudem eine geringere Fertigungstoleranz, da sie nun nicht mehr in definiertem Abstand von dem Festkörperelektrolyten von diesem beabstandet sein müssen. Wie die zuvor beschriebenen Federbleche können auch die einfacher ausgeführten Federelemente die Stromleitung für das erstmalige Laden der Speichereinrichtung übernehmen, da sie gleichzeitig mit einer elektronisch leitfähigen Schicht auf dem Festkörperelektrolyten und der leitfähigen Wandung in Kontakt stehen.

Weiterhin erlaubt die erfindungsgemäße Lösung die Verwendung von Bauteilen herkömmlicher elektrochemischer Speichereinrichtungen, wobei etwa der Festkörperelektrolyt zusammen mit dem Kathodenmaterial des durch den Festkörperelektrolyten definierten Kathodenraums mit einer neuen Wandung versehen wird, welche bei Fertigstellung der Speichereinrichtung die erfindungsgemäßen Merkmale verwirklicht. Insofern können auch zahlreiche Bauteile einer herkömmlichen elektrochemischen Speichereinrichtung Verwendung finden.

An dieser Stelle sei auch angeführt, dass das Seitenteil, typischerweise metallisch ist. Insofern vermittelt das Seitenteil eine vorteilhafte Wärmeabfuhr der in der elektrochemischen Speichereinrichtung erzeugten thermischen Energie. Ebenso erlaubt das Seitenteil die elektrische Kontaktierung. Insbesondere stellt das Seitenteil die Kontaktierungsfläche für die Anode zur Verfügung.

Gemäß einer ersten bevorzugten Ausführungsform der Erfindung ist vorgesehen, dass die Wandung eine Umformung aufweist, welche den ersten Bereich und den zweiten Bereich voneinander trennt. Eine solche Umformung kann durch herkömmliche Umformverfahren leicht erzielt werden. Infolgedessen ist der fertigungstechnische Aufwand der ausführungsgemäßen elektrochemischen Speichereinrichtung verhältnismäßig gering, so dass diese auch automatisiert in Serie hergestellt werden kann.

Gemäß einer weiteren Ausführungsform der Erfindung ist vorgesehen, dass der Festkörperelektrolyt eine Formänderung aufweist, welche den ersten Bereich und den zweiten Bereich voneinander trennt. Eine Formänderung soll hierbei und im Folgenden lediglich als eine sich ändernde Umfangsform des Festkörperelektrolyten verstanden werden. Aufgrund des typischen Herstellungsverfahrens für den Festkörperelektrolyten ist eine nachträgliche Umformung, wie etwa bei metallischen Werkteilen, nicht möglich. Die ausführungsgemäße Formveränderung erlaubt jedoch ebenfalls aufgrund leicht beherrschbarer Herstellungsverfahren die elektrochemische Speichereinrichtung kostengünstig und in hoher Stückzahl zu fertigen.

Gemäß eines weiteren Aspekts der Erfindung kann auch vorgesehen sein, dass der Übergang vom ersten Bereich zum zweiten Bereich eine Verjüngung der Beabstandung von Wandung zum Festkörperelektrolyten aufweist. Eine Verjüngung ist hierbei im Sinne eines kontinuierlich und im mathematischen Sinne als differenzierbar zu betrachtenden Übergangs zu verstehen. Demgemäß steht zu Erwarten, dass bei entsprechenden Füllstandsänderungen des Anodenmaterials im Anodenraum jeweils auch eine Änderung der Benetzung des Festkörperelektrolyten mit Anodenmaterial einhergeht. Die Ausbildung von Hot Spots, also Bereichen, die besonders hoher thermischer Spannung ausgesetzt sind, kann somit verringert bzw. sogar vermieden werden. Solche könnten etwa entstehen, wenn die Verjüngung nicht kontinuierlich, sondern etwa stufenförmig erfolgt.

Gemäß eines weiteren Aspekts der Erfindung kann auch vorgesehen sein, dass der zweite Bereich eine Mehrzahl an Verjüngungen der Beabstandung von Wandung zum Festkörperelektrolyten aufweist, und insbesondere der erste Bereich eine im Wesentlichen gleichmäßige Beabstandung von Wandung zum Festkörperelektrolyten.

Gemäß einer weiteren Ausführungsform der elektrochemischen Speichereinrichtung ist vorgesehen, dass der erste Bereich und der zweite Bereich jeweils zu dem Kopfteil bzw. zu dem Fußteil hin unterschiedlich beabstandet sind. Die Beabstandung betrifft hierbei wieder einen über den ersten bzw. zweiten Bereich gemittelten Abstand. Bspw. kann der Schwerpunkt der jeweiligen Bereiche zur Bestimmung der Beabstandung herangezogen werden. Insbesondere bei bestimmungsgemäßer Benutzung der elektrochemischen Speichereinrichtung und bestimmungsgemäßer Orientierung können beide Bereiche eine unterschiedliche Funktion erfüllen. Ist der erste Bereich etwa dem Fußteil näher angeordnet, dient dieser zur verbesserten Benetzung des Festkörperelektrolyten mit Anodenmaterial sowie gleichzeitig zur verbesserten Wärmeableitung direkt über das in dem ersten Bereich befindliche Anodenmaterial, wobei der zweite Bereich im Wesentlichen als Reservoir für Anodenmaterial dienen kann. So kann bspw. im zweiten Bereich, bei welchem die Wandung von dem Festkörperelektrolyten größer beabstandet ist als im ersten Bereich verhältnismäßig mehr Anodenmaterial bei Ladung der elektrochemischen Speichereinrichtung angesammelt werden, welches bei Entladung wieder zur Verfügung steht.

Entsprechend eines weiteren vorteilhaften Aspekts der Erfindung kann die elektrochemische Speichereinrichtung eine Längenausdehnungsachse L aufweisen, welche eine Symmetrieachse für wenigstens einen ersten Abschnitt des Festkörperelektrolyten und gleichzeitig eine Symmetrieachse für wenigstens einen zweiten Abschnitt der Wandung ist, wobei der erste Abschnitt den ersten Bereich wenigstens teilweise begrenzt und der zweite Abschnitt ebenfalls den ersten Bereich wenigstens teilweise begrenzt. Der Begriff des Abschnitts ist hier im Sinne eines Flächenabschnitts zu verstehen. Eine Symmetrieachse kann ausführungsgemäß eine Drehsymmetrieachse sein, aber auch eine andere Form der Symmetrie beschreiben. Eine Symmetrieachse ist insbesondere dann vorliegend, wenn es eine Gerade gibt, so dass es zu jedem Punkt des ersten bzw. zweiten Abschnitts einen weiteren Punkt des ersten bzw. zweiten Abschnitts gibt, so dass die Verbindungsstrecke von dieser Geraden rechtwinkelig halbiert wird. Die Symmetrieachse kann zusätzlich auch eine in einer Symmetrieebene liegende Gerade sein und repräsentiert damit eine Ebenensymmetrie. Es liegt also eine Flächensymmetrie in Bezug auf diese Ebene vor. Aufgrund der ausführungsgemäßen Symmetrie kann eine besonders günstige Wärmeabfuhr in vorteilhafter Form erfolgen. Insbesondere bei Vorliegen einer Drehsymmetrie kann die aus der Speichereinrichtung abzuführende Wärme über im Wesentlichen alle Bereiche des Seitenteils erreicht werden.

Weiterhin ist in einer besonders bevorzugten Ausführungsform der Erfindung vorgesehen, dass der zweite Bereich eine Mehrzahl an Verjüngungen der Beabstandung von Wandung bzw. Seitenteil zum Festkörperelektrolyten aufweist, und insbesondere der erste Bereich eine im Wesentlichen gleichmäßige Beabstandung zwischen Wandung und Festkörperelektrolyt. Die Mehrzahl an Verjüngungen ist insbesondere in Umfangsrichtung der elektrochemischen Speichereinrichtung angeordnet, insbesondere senkrecht zu der Längsausdehnungsrichtung L der elektrochemischen Speichereinrichtung. So kann die Wandung im ersten Bereich auch eine geeignete Formgebung aufweisen, wohingegen etwa das Seitenteil des zweiten Bereichs eine solche Formgebung nicht aufweist und etwa nur gleichmäßig geformt ist. Eine solche gleichmäßige Formgebung ist etwa im Querschnitt rund, rechteckig, dreieckig, usw. Eine solche Ausführungsform trägt der typischen Form des Festkörperelektrolyten Rechnung, welcher im Querschnitt eine wellige Umfangsform aufweisen kann. Insbesondere kann die Umfangsform vier, sechs, acht oder auch zehn Wellenberge und Wellentäler aufweisen. Weist die Umfangsform jeweils vier Wellenberge und Wellentäler auf, kann diese etwa Kleeblatt-förmig ausgebildet sein.

Gemäß einer weiteren Ausführungsform der Erfindung ist vorgesehen, dass die Wandung von einem Becher umfasst ist, welcher wenigstens teilweise den Festkörperelektrolyten umgibt. Der Becher umfasst hierbei insbesondere Seitenteil sowie Fußteil der elektrochemischen Speichereinrichtung. Hierbei kann die elektrochemische Speichereinrichtung in besonders einfacher Weise hergestellt werden.

Ausführungsgemäß ist es ebenfalls vorgesehen, dass nach einem weiteren Aspekt der Erfindung die Wandung der elektrochemischen Speichereinrichtung von dem Festkörperelektrolyten im ersten Bereich gleichmäßig beabstandet ist. Eine gleichmäßige Beabstandung ist so zu verstehen, dass alle Flächenelemente der Wandung im Wesentlichen vom Festkörperelektrolyten gleich beabstandet sind.

Ebenso ist es möglich, dass die Wandung von dem Festkörperelektrolyten im zweiten Bereich gleichmäßig beabstandet ist. Hierbei sind im Wesentlichen alle Flächenelemente der Wandung wiederum im Wesentlichen vom Festkörperelektrolyten gleichmäßig beabstandet. Eine vorteilhafte Ausführungsform weist jedoch auch eine sich ändernde bzw. sich regelmäßig ändernde oder sich zyklisch ändernde Beabstandung von Wandung und Festkörperelektrolyten auf.

Entsprechend einer besonders bevorzugten Ausführungsform der Erfindung ist vorgesehen, dass die Wandung von dem Festkörperelektrolyten im ersten Bereich höchstens 3 mm, bevorzugt höchstens 1,5 mm beabstandet ist. Auch kleinere Werte für die Beabstandung, etwa 1 mm und darunter, können in Erwägung gezogen werden. Aufgrund der geringen Beabstandung zwischen Wandung und Festkörperelektrolyten erfolgt auch bei bereits geringem Ladezustand der elektrochemischen Speichereinrichtung eine Ausfüllung des Raumes, welcher im ersten Bereich zwischen Wandung und Festkörperelektrolyt vorgesehen ist.

Entsprechend einer weiteren besonders bevorzugten Ausführungsform der Erfindung ist vorgesehen, dass die Wandung von dem Festkörperelektrolyten im zweiten Bereich im Mittel mindestens 4 mm, bevorzugt mindestens 6 mm beabstandet ist. Auch größere Werte für die Beabstandung, etwa 10 mm und darüber werden konkret in Erwägung gezogen. Aufgrund dieser verhältnismäßig größeren Beabstandung im zweiten Bereich kann der Raum zwischen Wandung und Festkörperelektrolyt im zweiten Bereich als Reservoir für Anodenmaterial des Anodenraums genutzt werden. Durch die ausführungsgemäße Beabstandung ist auch die Nachbildung der Geometrie herkömmlicher Zellen leicht möglich.

Entsprechend einer vorteilhaften Ausführungsform der elektrochemischen Speichereinrichtung ist das Verhältnis des Raumvolumens, das durch den ersten Bereich zwischen Wandung und Festkörperelektrolyten bestimmt ist, zu dem Raumvolumen, das durch den zweiten Bereich zwischen Wandung und Festkörperelektrolyten bestimmt ist, höchstens 60 %, bevorzugt höchstens 30 %. Demgemäß benötigt der Raum zwischen Wandung und Festkörperelektrolyten im ersten Bereich ein verhältnismäßig geringes Füllvolumen, um vollständig von Anodenmaterial ausgefüllt zu werden. Demgemäß kann auch bei einem verhältnismäßig geringen Ladezustand vorteilhaft im ersten Bereich vorhandene Wärme nach außen zum Seitenteil hin abgeleitet werden.

Gemäß einer besonders vorteilhaften Ausführungsform der Erfindung ist der Raum, der durch den ersten Bereich zwischen Wandung und Festkörperelektrolyten bestimmt ist, bei vollständiger Ladung der elektrochemischen Speichereinrichtung vollständig durch Anodenmaterial ausgefüllt, wobei der Raum, der durch den zweiten Bereich zwischen Wandung und Festkörperelektrolyten bestimmt ist, nur teilweise von Anodenmaterial ausgefüllt ist. Demgemäß wird wiederum der Raum im zweiten Bereich als Reservoir für das Anodenmaterial nutzbar sein, wobei der Raum im ersten Bereich auch bei relativ geringem Ladungszustand bereits vollständig mit Anodenmaterial ausgefüllt sein wird.

Gemäß einer weiteren besonders bevorzugten Ausführungsform der Erfindung ist vorgesehen, dass der Raum, der durch den ersten Bereich zwischen Wandung und Festkörperelektrolyten bestimmt ist, bei bereits 60 % der vollständigen Aufladung der elektrochemischen Speichereinrichtung vollständig durch Anodenmaterial ausgefüllt ist, bevorzugt bei bereits 40 % der vollständigen Aufladung der elektrochemischen Speichereinrichtung vollständig durch Anodenmaterial ausgefüllt ist. Der ausführungsgemäße Aufladezustand bezieht sich hierbei insbesondere auf die Menge der gespeicherten Ladung bzw. auf die Menge des im Anodenraum befindlichen Anodenmaterials.

Gemäß einer weiteren Ausführungsform der Erfindung ist der Raum, der durch den zweiten Bereich zwischen Wandung und Festkörperelektrolyten bestimmt ist, bei bestimmungsgemäßer Nutzung der elektrochemischen Speichereinrichtung als Speicherreservoir für das Anodenmaterial ausgebildet.

Gemäß einer ebenfalls vorteilhaften Ausführungsform der elektrochemischen Speichereinrichtung ist vorgesehen, dass im ersten Bereich zwischen Wandung und Festkörperelektrolyten wenigstens ein Federelement angeordnet ist, welches sowohl die Wandung als auch den Festkörperelektrolyten kontaktiert, welches jedoch keine Kapillarzone ausbildet, in welcher das Anodenmaterial bei flüssigem Aggregatzustand durch eine Kapillarwirkung zwischen dem Festkörperelektrolyten und dem Federelement zur verbesserten Benetzung des Festkörperelektrolyten bei Betriebstemperatur bewegt wird. Das wenigstens eine Federelement hat somit insbesondere nur eine mechanische Dämpfungswirkung, etwa bei Einwirkung von mechanischen Kräften auf die Speichereinrichtung. Zudem gewährleistet das Federelement auch eine elektrische Kontaktierung etwa zur Initialaufladung der elektrochemischen Speichereinrichtung, wenn diese das erste Mal in Betrieb genommen wird.

Nachfolgend soll die Erfindung anhand einzelner Figuren im Detail dargestellt werden. Hierbei sind die Figuren lediglich schematisch zu verstehen und beschränken die vorliegende Erfindung nicht hinsichtlich ihrer Ausführbarkeit.

Weiterhin ist darauf hinzuweisen, dass gleiche Merkmale bzw. gleich wirkende Merkmale durch gleiche Bezugszeichen beschrieben werden.

Fernerhin werden die in den nachfolgenden Figuren dargestellten Einzelmerkmale für sich allein wie auch in beliebiger Kombination mit anderen Merkmalen beansprucht, soweit diese Kombination unter die vorliegende Erfindungsidee zu rechnen ist.

Hierbei zeigen:
- Figur 1: eine Ausführungsform einer elektrochemischen Speichereinrichtung gemäß dem Stand der Technik in schematischer Darstellung als seitliche Schnittansicht durch die mittige Längserstreckungsachse;
- Figur 2: eine erste Ausführungsform der erfindungsgemäßen elektrochemischen Speichereinrichtung in schematischer Darstellung als seitliche Schnittansicht durch die mittige Längserstreckungsachse;
- Figur 3: eine weitere Ausführungsform der erfindungsgemäßen elektrochemischen Speichereinrichtung in schematischer Darstellung als seitliche Schnittansicht durch die mittige Längserstreckungsachse;
- Figur 4: eine Ausführungsform des erfindungsgemäßen Verfahrens zur Herstellung einer elektrochemischen Speichereinrichtung in flussdiagrammatischer Darstellung;
- Figur 5: eine weitere Ausführungsform des erfindungsgemäßen Verfahrens zur Herstellung einer elektrochemischen Speichereinrichtung in flussdiagrammatischer Darstellung;

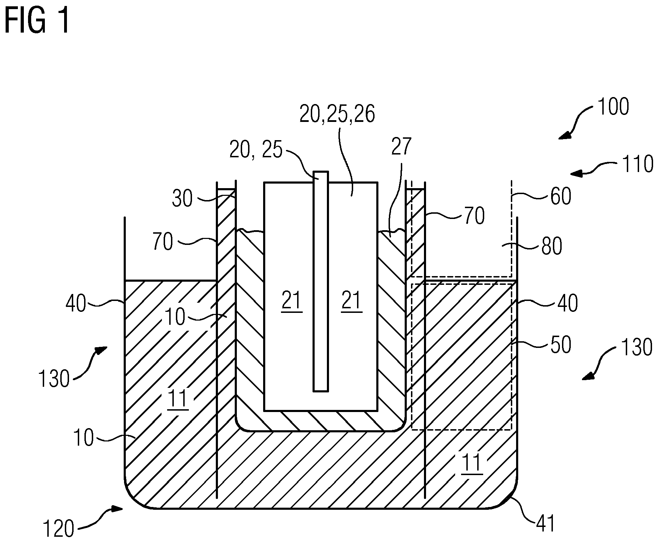

Figur 1 zeigt eine Ausführungsform einer elektrochemischen Speichereinrichtung 100, wie sie aus dem Stand der Technik bekannt ist, in seitlicher Schnittansicht. Hierbei umfasst die elektrochemische Speichereinrichtung 100 einen durch einen Festkörperelektrolyten 30 von einem Kathodenraum 21 getrennten Anodenraum 11. Der Festkörperelektrolyt 30 ist hierbei becherförmig ausgebildet. Der Anodenraum 11 ist bei Ladung der elektrochemischen Speichereinrichtung 100 mit Anodenmaterial 10 wenigstens teilweise angefüllt. Entsprechend der Technik der Natrium-Nickel-Chlorid-Zelle ist das Anodenmaterial 10 elementares Natrium, welches bei Betriebstemperatur der Speichereinrichtung 100 (zwischen 200 °C und 350 °C) in flüssiger Phase vorliegt.

Der Kathodenraum ist seinerseits durch Kathodenmaterial 20 angefüllt, wobei der Füllstandspegel des flüssigen Kathodenelektrolyten 27 in dem Kathodenraum je nach Ladungszustand der elektrochemischen Speichereinrichtung 100 mit dem Füllstandspegel des flüssigen Anodenmaterials 10 in dem Anodenraum 11 korreliert. Das Kathodenmaterial 20 umfasst vorliegend insbesondere eine metallische Kathode 25, sowie ein Kathodensalz 26 und einen Kathodenelektrolyten 27. Gemäß der Technologie einer Natrium-Nickel-Chlorid-Zelle ist die Kathode 25 als metallischer Nickelstab bzw. -draht in elektrischem Kontakt mit Nickelpulver ausgebildet, das Kathodensalz 26 NaCl, wobei der Kathodenelektrolyt 27 als Mischung verschiedener bei Betrieb der Speichereinrichtung 100 entstehender Salze und Substanzen vorliegt.

Die Kathode 25 erlaubt zudem im Bereich des Kopfteils 110 der elektrochemischen Speichereinheit 100 eine elektrische Kontaktierung, um je nach Ladungs- bzw. Entladungszustand elektrische Ladungen zu- bzw. abzuführen. Die Anode der elektrochemischen Speichereinrichtung 100 wird durch das metallisch ausgeführte Seitenteil 130 ausgebildet. Das Seitenteil 130 ist seinerseits Teil eines Bechers 41, welcher sowohl das Fußteil 120 sowie das Seitenteil 130 umfasst. Die Abdichtung der elektrochemischen Speichereinrichtung 100 im Bereich des Kopfteils 110 erfolgt nach aus dem Stand der Technik bekannten Lehren.

Der von der elektrochemischen Speichereinrichtung 100 umfasste Festkörperelektrolyt 30 erlaubt eine spezifische Ionenleitfähigkeit, ohne jedoch einen darüber hinausgehenden Stoffaustausch zwischen Anodenraum 11 und Kathodenraum 21 zu ermöglichen. Gemäß der Technologie der Natrium-Nickel-Chlorid-Zelle ist der Festkörperelektrolyt 30 als β-Al₂O₃ bzw. β''- Al₂O₃ ausgebildet und ermöglicht somit eine selektive Na⁺-Leitfähigkeit. Infolgedessen ist es den Na⁺-Ionen bei Aufladung der elektrochemischen Speichereinrichtung 100 möglich, aus dem Kathodenraum in den Anodenraum zu wandern, wobei sie dort durch Bereitstellung von Elektronen zu elementarem Natrium reduziert werden. Dieses sammelt sich im Laufe des Ladevorganges zunehmend im Anodenraum an.

Wird die elektrochemische Speichereinrichtung 100 entladen, erfolgt ein in entgegen gesetzter Richtung ablaufender Na⁺-Ionen-Transport, wobei Natrium an der Grenzfläche zwischen dem Festkörperelektrolyten 30 und dem Anodenmaterial 10 oxidiert wird, wonach das dadurch entstehende Na⁺-Ion durch den Festkörperelektrolyten 30 in dem Kathodenraum 21 wandert. Je nach Auflade- bzw. Entladezustand unterscheidet sich damit der Füllstandspegel an Anodenmaterial 10 im Anodenraum 11 und an Kathodenelektrolyt 27 im Kathodenraum 21.

Um den Innenwiderstand der elektrochemischen Speichereinrichtung 100 zu vermindern, und gleichzeitig einen erhöhten Ladungstransport durch den Festkörperelektrolyten 30 zu ermöglichen, sieht die elektrochemische Speichereinrichtung 100 ein Federblech 70 vor (vorliegend als zwei separate Federbleche 70 dargestellt), welches von der Oberfläche des Festkörperelektrolyten 30 nur sehr gering beabstandet im Anodenraum 11 angeordnet ist. Die Beabstandung des Federbleches 70 von der Oberfläche des Festkörperelektrolyten 30 ist hierbei derart gering, dass bei Betrieb der elektrochemischen Speichereinrichtung 100, wenn das Anodenmaterial 10 in flüssiger Form vorliegt, durch Kapillarwirkung flüssiges Anodenmaterial 10 zwischen Federblech 70 und Festkörperelektrolyt 30 entgegen der Gravitationswirkung der Erde bewegt werden kann. Hierbei ist vorausgesetzt, dass die betriebsmäßige Anordnung der elektrochemischen Speichereinrichtung 100 so ist, dass das Fußteil 120 mit Bezug zum Erdkern an diesem näher angeordnet ist als das Kopfteil 110.

Aufgrund der Kapillarwirkung sowie aufgrund des sich einstellenden Füllstandspegels von Anodenmaterial 10 im Anodenraum 11 bilden sich vorliegend zwei Bereiche 50, 60 aus, die eine unterschiedliche Wärmeableitung aus der elektrochemischen Speichereinrichtung 100 hin zum Seitenteil 130 ermöglichen. Der erste Bereich 50, welcher näher am Fußteil 120 angeordnet ist, wird bestimmt durch den Festkörperelektrolyten 30 sowie die Wandung 40 des Seitenteils 130, wobei der durch den ersten Bereich 50 bestimmte Raum von Anodenmaterial 10 vollständig ausgefüllt ist. Damit erlaubt die elektrochemische Speichereinrichtung 100 im ersten Bereich 50 eine verhältnismäßig effiziente und direkte Wärmeleitung durch das in diesem ersten Bereich 50 befindliche Anodenmaterial 10. Ein zweiter Bereich 60, welcher näher am Kopfteil 110 der elektrochemischen Speichereinrichtung 100 angeordnet ist, ist hierzu im Gegenteil nicht vollständig mit Anodematerial 10 gefüllt. Da der Füllstandspegel in dem Anodenraum 11 nicht in den zweiten Bereich 60 reicht, erfolgt die Wärmeableitung zunächst über das zwischen Festkörperelektrolyt 30 und Federblech 70 durch Kapillarwirkung gehaltene flüssige Anodenmaterial 10, anschließend durch das Federblech 70 hindurch, sowie weiter daran anschließend durch den nicht mit Anodenmaterial 10 gefüllten Gasraum 80. Aufgrund der im Vergleich zum ersten Bereich 50 wesentlich schlechteren Wärmeleitfähigkeit dieses Gasraums 80, kann die bei Betrieb der elektrochemischen Speichereinrichtung erzeugte Wärme nicht vergleichbar effizient nach außen zum Seitenteil 130 hin abgeführt werden. Die Folge ist insbesondere in demjenige Bereich, bei welchem der erste Bereich 50 und zweite Bereich 60 aneinander grenzen (dies entspricht im Wesentlichen dem Niveau des Füllstandspegels des Anodenmaterials 10), starke thermische Spannungen. Diese Spannungen wiederum verursachen insbesondere beim Festkörperelektrolyten 30 eine schnellere Materialermüdung, wodurch bei Durchbruch des Festkörperelektrolyten 30 ein Kurzschluss der elektrochemischen Speichereinrichtung 100 die Folge ist.

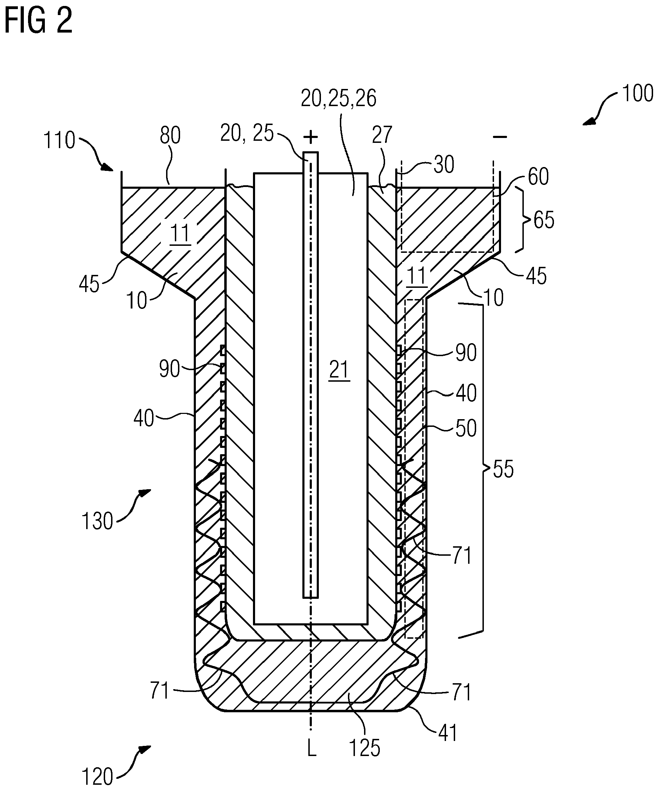

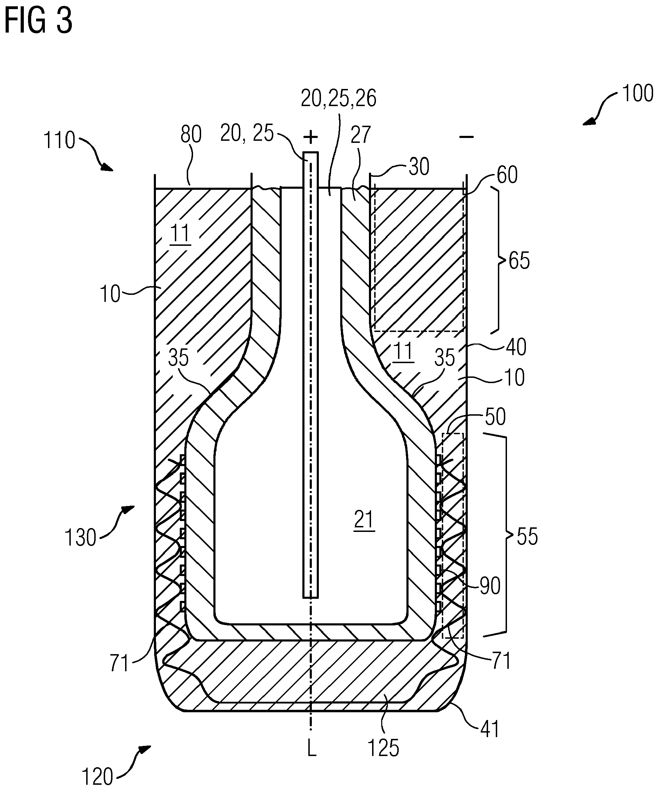

Figur 2 zeigt eine Ausführungsform einer elektrochemischen Speichereinrichtung 100 gemäß der vorliegenden Erfindung. Hierbei unterscheidet sich die elektrochemische Speichereinrichtung 100 von der in Figur 1 gezeigten Speichereinrichtung 100 in erster Linie dahingehend, dass das Seitenteil 130 eine Wandung 40 aufweist, die wiederum eine Umformung 45 umfasst. Die Umformung 45 erlaubt die Bestimmung zweier unterschiedlicher Bereiche 50 und 60, in welchen bei kontinuierlicher Ladung bzw. Entladung der elektrochemischen Speichereinrichtung 100 die Änderungsrate des Füllstandspegels sich zueinander unterscheidet. Ebenso unterscheidet sich die Menge von Anodenmaterial 10, welche sich in dem Raum dieser Bereiche 50 und 60 befindet (Beachte: die Definition von erstem Bereich 50 und zweitem Bereich 60 gemäß Figur 2 und 3 entspricht nicht der Definition von erstem Bereich 50 und zweitem Bereich 60 gemäß Figur 1. Die für Figur 1 gewählte Definition dient lediglich dem verbesserten Verständnis.).

Aufgrund der geringeren Beabstandung von Wandung 40 und Festkörperelektrolyt 30 in dem ersten Bereich 50, also in einem Bereich zwischen der Umformung 45 und dem Fußteil 120, wird auch bei verhältnismäßig geringem Ladezustand eine große Oberfläche des Festkörperelektrolyten 30 benetzt. Da der Anodenraum 11 im ersten Bereich 50 schon bei verhältnismäßig geringem Ladezustand vollständig mit flüssigem Anodenmaterial 10 gefüllt ist, erfolgt eine effiziente und vorteilhafte direkte Wärmeableitung zum Seitenteil 130 hin über das Anodenmaterial 10. Anders verhält es sich in dem zweiten Bereich 60, der zwischen der Umformung 45 und dem Kopfteil 110 angeordnet ist. Hier ist lediglich bei relativ hohem Ladungszustand der Raum des zweiten Bereichs 60 vollständig mit Anodenmaterial ausgefüllt, so dass nur bei solchen Füllständen eine direkte Wärmeübertragung hin zum Seitenteil 130 ermöglicht werden kann. Insofern ist der Raum des zweiten Bereichs 60 in erster Linie als Reservoir für Anodenmaterial 10 ausgebildet.

Die elektrochemische Speichereinrichtung 100 weist fernerhin ein Federelement 71 auf, welches im Vergleich zu dem in Figur 1 gezeigten Federblech 70 eine andere geometrische Form aufweist. Das vorliegend gezeigte Federelement 71 erfüllt zunächst eine Kontaktierungsfunktion, um einen elektrischen Kontakt zwischen dem metallischen Seitenteil 130 und der mit einer zusätzlich angebrachten Leitfähigkeitsschicht 90 versehenen Oberfläche des Festkörperelektrolyten 30 herzustellen. Dieser Kontakt ist insbesondere bei der initialen Aufladung der elektrochemischen Speichereinrichtung 100 erforderlich, da zu diesem Zeitpunkt noch kein Anodenmaterial 10 im Anodenraum 11 vorliegt, welches einen elektrischen Kontakt zum Seitenteil 130 hin vermitteln kann. Weiter erfüllt das Federelement 71 eine mechanische Schutzfunktion, da es durch Ondulationen einen auf die elektrochemische Speichereinheit 100 äußerlich einwirkenden Kraftstoß dämpfen kann und somit die mechanische Belastung auf den Festkörperelektrolyten 30 verringert.

Ähnlich den aus dem Stand der Technik bekannten Speichereinheiten 100 weist auch die vorliegende Ausführungsform im Fußbereich 125 nahe des Fußteils 120 ein Totvolumen auf, welches insbesondere dazu dient, sich bei Betrieb der elektrochemischen Speichereinrichtung 100 bildende Verunreinigungen zu sammeln, ohne dass diese die elektrische und thermische Leitung zwischen Festkörperelektrolyt 30 und Seitenteil 130 beeinträchtigen würden.

Figur 3 zeigt eine weitere mögliche Ausführungsform der erfindungsgemäßen elektrochemischen Speichereinrichtung 100, die sich jedoch von der in Figur 2 gezeigten Ausführungsform dahingehend unterscheidet, dass die Wandung 40 des Seitenteils 130 keine Umformung 45 aufweist, jedoch der Festkörperelektrolyt 30 derart zwischen dem Kopfteil 110 und dem Fußteil 120 in seiner Form verändert ist, dass wiederum ein erster Bereich 50 nahe dem Fußteil 120 und ein zweiter Bereich 60 nahe dem Kopfteil 110 in dem Anodenraum 11 ausgebildet ist. Der Festkörperelektrolyt 30 weist hierbei eine Formänderung 35 zwischen Kopfteil 110 und Fußteil 120 auf. Der näher am Fußteil 120 angeordnete erste Bereich 50 wird durch die Wandung 40 des Seitenteils 130 sowie durch die Oberfläche des Festkörperelektrolyten 30 unterhalb der Formänderung 35 bestimmt. Oberhalb der Formänderung 35 weist der Festkörperelektrolyt einen verhältnismäßig geringeren Umfang auf, so dass der zweite Bereich 60 im Vergleich zum ersten Bereich 50 ein größeres Volumen einnimmt. Hinsichtlich der Vorteile zur Wärmeleitfähigkeit durch diese Bereiche 50 und 60 ist die in Figur 3 gezeigte Ausführungsform vergleichbar zu der in Figur 2 gezeigten.

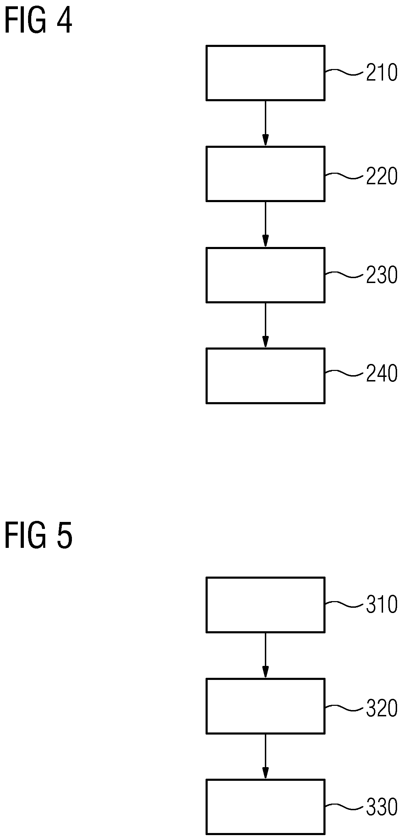

Figur 4 zeigt eine erste Ausführungsform des erfindungsgemäßen Verfahrens zur Herstellung einer elektrochemischen Speichereinrichtung, insbesondere einer elektrochemischen Speichereinrichtung wie vorab beschrieben, welches folgende Schritte umfasst:
- Bereitstellen eines Ionen leitenden Festkörperelektrolyten 30 (erster Verfahrensschritt 210);
- Bereitstellen einer Wandung 40 (zweiter Verfahrensschritt 220);
- Umformen der Wandung 40 (dritter Verfahrensschritt 230) und
- Umgeben des Festkörperelektrolyten 30 mit der umgeformten Wandung 40 derart, dass zwischen Wandung 40 und Festkörperelektrolyten 30 bei Fertigstellung der elektrochemischen Speichereinrichtung 100 wenigstens ein erster Bereich 50 eines Anodenraums 11 und ein zweiter Bereich 60 eines Anodenraums 11 ausgebildet sind, welche beiden Bereiche 50, 60 sich jeweils durch die Beabstandung der Wandung 40 von dem Festkörperelektrolyten 30 unterscheiden (vierter Verfahrensschritt 240).

Figur 5 zeigt eine weitere Ausführungsform des erfindungsgemäßen Verfahrens zur Herstellung einer elektrochemischen Speichereinrichtung 100, insbesondere einer vorab beschriebenen elektrochemischen Speichereinrichtung 100, welches folgende Schritte umfasst:
- Bereitstellen eines eine Formänderung aufweisenden, sowie Ionen leitenden Festkörperelektrolyten 30 (erster Verfahrensschritt 310);
- Bereitstellen einer Wandung 40 (zweiter Verfahrensschritt 320);
- Umgeben des Festkörperelektrolyten 30 mit der Wandung 40 derart, dass zwischen Wandung 40 und Festkörperelektrolyten 30 bei Fertigstellung der elektrochemischen Speichereinrichtung 100 wenigstens ein erster Bereich 50 eines Anodenraums 11 und ein zweiter Bereich 60 eines Anodenraums 11 ausgebildet sind, welche beiden Bereiche 50, 60 sich jeweils durch die Beabstandung der Wandung 40 von dem Festkörperelektrolyten 30 unterscheiden (dritter Verfahrensschritt 330).

Weitere Ausführungsformen und Merkmale ergeben sich aus den Unteransprüchen.

## Patentansprüche

1. Elektrochemische Speichereinrichtung (100), welche bei regulärem Betrieb einen mit einem Anodenmaterial (10) befüllten Anodenraum (11) aufweist, sowie mit einem Kathodenmaterial (20) befüllten Kathodenraum (21), wobei der Anodenraum (11) von dem Kathodenraum (21) durch einen Ionen leitenden Festkörperelektrolyten (30) getrennt ist, und wobei der Anodenraum (11) zu einer Seite wenigstens teilweise durch den Festkörperelektrolyten (30) begrenzt ist, und zu einer anderen Seite wenigstens teilweise von einer den Festkörperelektrolyten (30) wenigstens teilweise umgebenden Wandung (40), wobei die elektrochemische Speichereinrichtung (100) ein Kopfteil (110) aufweist, an welchem elektrische Energie zu- bzw. abgeführt werden kann, ein dem Kopfteil (110) gegenüber angeordnetes Fußteil (120), und mindestens ein die wenigstens eine Wandung (40) umfassendes Seitenteil (130), welches zwischen Kopfteil (110) und Fußteil (120) angeordnet ist, wobei zwischen Wandung (40) und Festkörperelektrolyten (30) wenigstens ein erster Bereich (50) und ein zweiter Bereich (60) ausgebildet sind, welche beiden Bereiche (50, 60) sich durch die jeweilige Beabstandung der Wandung (40) von dem Festkörperelektrolyten (30) unterscheiden
**dadurch gekennzeichnet, dass** der erste Bereich (50) dem Fußteil (120) näher angeordnet ist und der zweite Bereich (60) dem Kopfteil (110) näher angeordnet ist und beim zweiten Bereich (60) die Wandung (40) von dem Festkörperelektrolyten (30) größer beabstandet ist als im ersten Bereich (50), und dass der erste Bereich (50) eine im Wesentlichen gleichmäßige Beabstandung von Wandung (40) zum Festkörperelektrolyten (30) aufweist.

2. Elektrochemische Speichereinrichtung gemäß Anspruch 1, **dadurch gekennzeichnet, dass** die Wandung (40) eine Umformung (45) aufweist, welche den ersten Bereich (50) und den zweiten Bereich (60) voneinander trennt.

3. Elektrochemische Speichereinrichtung gemäß einem der vorhergehenden Ansprüche,
**dadurch gekennzeichnet, dass** der Festkörperelektrolyt (30) eine Formänderung (35) aufweist, welche den ersten Bereich (50) und den zweiten Bereich (60) voneinander trennt.

4. Elektrochemische Speichereinrichtung gemäß einem der vorhergehenden Ansprüche,
**dadurch gekennzeichnet, dass** der Übergang vom ersten Bereich (50) zum zweiten Bereich (60) eine Verjüngung der Beabstandung von Wandung zum Festkörperelektrolyten aufweist.

5. Elektrochemische Speichereinrichtung gemäß einem der vorhergehenden Ansprüche,
**dadurch gekennzeichnet, dass** der erste Bereich (50) und der zweite Bereich (60) jeweils zu dem Kopfteil (110) bzw. zu dem Fußteil (120) unterschiedlich beabstandet sind.

6. Elektrochemische Speichereinrichtung gemäß einem der vorhergehenden Ansprüche,
**dadurch gekennzeichnet, dass** dass der zweite Bereich (60) eine Mehrzahl an Verjüngungen der Beabstandung von Wandung (40) zum Festkörperelektrolyten (30) aufweist, und insbesondere der erste Bereich (50) eine im Wesentlichen gleichmäßige Beabstandung von Wandung (40) zum Festkörperelektrolyten (30)..

7. Elektrochemische Speichereinrichtung gemäß einem der vorhergehenden Ansprüche,
**dadurch gekennzeichnet, dass** die Wandung (40) von einem Becher (41) umfasst ist, welcher wenigstens teilweise den Festkörperelektrolyten (30) umgibt.

8. Elektrochemische Speichereinrichtung gemäß einem der vorhergehenden Ansprüche,
**dadurch gekennzeichnet**, **das s** die Wandung (40) von dem Festkörperelektrolyten (30) im ersten Bereich (50) höchstens 3 mm, bevorzugt höchstens 1,5 mm beabstandet ist.

9. Elektrochemische Speichereinrichtung gemäß einem der vorhergehenden Ansprüche,
**dadurch gekennzeichnet, dass** die Wandung (40) von dem Festkörperelektrolyten (30) im zweiten Bereich (60) im Mittel mindestens 4 mm, bevorzugt mindestens 6 mm beabstandet ist.

10. Elektrochemische Speichereinrichtung gemäß einem der vorhergehenden Ansprüche,
**dadurch gekennzeichnet, dass** das Verhältnis des Raumvolumens, das durch den ersten Bereich (50) zwischen Wandung (40) und Festkörperelektrolyten (30) bestimmt ist, zu dem Raumvolumen, das durch den zweiten Bereich (60) zwischen Wandung (40) und Festkörperelektrolyten (30) bestimmt ist, höchstens 60 % ist, bevorzugt höchstens 30 % ist.

11. Elektrochemische Speichereinrichtung gemäß einem der vorhergehenden Ansprüche,
**dadurch gekennzeichnet, dass** im ersten Bereich (50) zwischen Wandung (40) und Festkörperelektrolyten (30) wenigstens ein Federelement (71) angeordnet ist, welches sowohl die Wandung (40) als auch den Festkörperelektrolyten (30) kontaktiert, welches jedoch keine Kapillarzone ausbildet, in welcher das Anodenmaterial bei flüssigem Aggregatzustand durch eine Kapillarwirkung zwischen dem Festkörperelektrolyten (30) und dem Federelement (71) zur verbesserten Benetzung des Festkörperelektrolyten (30) bei Betriebstemperatur bewegt würde.

12. Verfahren zur Herstellung einer elektrochemischen Speichereinrichtung (100), insbesondere einer elektrochemischen Speichereinrichtung (100) nach einem der vorhergehenden Ansprüche, welches folgende Schritte umfasst:
- Bereitstellen eines Ionen leitenden Festkörperelektrolyten (30) ;
- Bereitstellen einer Wandung (40);
- Umformen der Wandung (40) und
- Umgeben des Festkörperelektrolyten (30) mit der umgeformten Wandung (40) derart, dass zwischen Wandung (40) und Festkörperelektrolyten (30) bei Fertigstellung der elektrochemischen Speichereinrichtung (100) wenigstens ein erster Bereich (50) eines Anodenraums (11) und ein zweiter Bereich (60) eines Anodenraums (11) ausgebildet sind, welche beiden Bereiche (50, 60) sich jeweils durch die Beabstandung der Wandung (40) von dem Festkörperelektrolyten (30) derart unterscheiden, dass der erste Bereich (50) dem Fußteil (120) näher angeordnet ist und der zweite Bereich (60) dem Kopfteil (110) näher angeordnet ist und beim zweiten Bereich (60) die Wandung (40) von dem Festkörperelektrolyten (30) größer beabstandet ist als im ersten Bereich (50), und dass der erste Bereich (50) eine im Wesentlichen gleichmäßige Beabstandung von Wandung (40) zum Festkörperelektrolyten (30) aufweist.

13. Verfahren zur Herstellung einer elektrochemischen Speichereinrichtung (100), insbesondere einer elektrochemischen Speichereinrichtung (100) nach einem der vorhergehenden Ansprüche, welches folgende Schritte umfasst:
- Bereitstellen eines eine Formänderung (35) aufweisenden, sowie Ionen leitenden Festkörperelektrolyten (30);
- Bereitstellen einer Wandung (40);
- Umgeben des Festkörperelektrolyten (30) mit der Wandung (40) derart, dass zwischen Wandung (40) und Festkörperelektrolyten (30) bei Fertigstellung der elektrochemischen Speichereinrichtung (100)wenigstens ein erster Bereich (50) eines Anodenraums (11) und ein zweiter Bereich (60) eines Anodenraums (11) ausgebildet sind, welche beiden Bereiche (50, 60) sich jeweils durch die Beabstandung der Wandung (40) von dem Festkörperelektrolyten (30) derart unterscheiden, dass der erste Bereich (50) dem Fußteil (120) näher angeordnet ist und der zweite Bereich (60) dem Kopfteil (110) näher angeordnet ist und beim zweiten Bereich (60) die Wandung (40) von dem Festkörperelektrolyten (30) größer beabstandet ist als im ersten Bereich (50), und dass der erste Bereich (50) eine im Wesentlichen gleichmäßige Beabstandung von Wandung (40) zum Festkörperelektrolyten (30) aufweist.

## Claims

1. Electrochemical storage device (100) which, when in ordinary operation, has an anode compartment (11) filled with an anode material (10) and a cathode compartment (21) filled with a cathode material (20), wherein the anode compartment (11) is separated from the cathode compartment (21) by an ion-conductive solid electrolyte (30), and wherein the anode compartment (11) is delimited on one side at least in part by the solid electrolyte (30) and on another side at least in part by a wall (40) which surrounds the solid electrolyte (30) at least in part, wherein the electrochemical storage device (100) has a top part (110), at which electrical energy may be fed in or out, a bottom part (120) arranged opposite the top part (110), and at least one side part (130) which comprises the at least one wall (40) and is arranged between the top part (110) and bottom part (120), wherein there are provided between the wall (40) and solid electrolyte (30) at least one first region (50) and one second region (60), which two regions (50, 60) differ by the respective spacing of the wall (40) from the solid electrolyte (30),
**characterized in that**
the first region (50) is arranged closer to the bottom part (120) and the second region (60) is arranged closer to the top part (110) and in the second region (60) the wall (40) is spaced further from the solid electrolyte (30) than in the first region (50), and **in that** the first region (50) has a substantially uniform spacing between the wall (40) and the solid electrolyte (30).

2. Electrochemical storage device according to Claim 1,
**characterized in that**
the wall (40) has a formed portion (45) which separates the first region (50) and the second region (60) from one another.

3. Electrochemical storage device according to one of the preceding claims,
**characterized in that**
the solid electrolyte (30) has a change in shape (35) which separates the first region (50) and the second region (60) from one another.

4. Electrochemical storage device according to one of the preceding claims,
**characterized in that**
the transition from the first region (50) to the second region (60) has a taper of the spacing between the wall and the solid electrolyte.

5. Electrochemical storage device according to one of the preceding claims,
**characterized in that**
the first region (50) and the second region (60) are in each case differently spaced from the top part (110) and the bottom part (120).

6. Electrochemical storage device according to one of the preceding claims,
**characterized in that**
the second region (60) has a plurality of tapers of the spacing between the wall (40) and the solid electrolyte (30), and in particular the first region (50) has a substantially uniform spacing between the wall (40) and the solid electrolyte (30).

7. Electrochemical storage device according to one of the preceding claims,
**characterized in that**
the wall (40) is comprised by a can (41) which at least in part surrounds the solid electrolyte (30).

8. Electrochemical storage device according to one of the preceding claims,
**characterized in that**
the wall (40) is spaced from the solid electrolyte (30) in the first region (50) by at most 3 mm, preferably by at most 1.5 mm.

9. Electrochemical storage device according to one of the preceding claims,
**characterized in that**
the wall (40) is spaced from the solid electrolyte (30) in the second region (60) by on average at least 4 mm, preferably at least 6 mm.

10. Electrochemical storage device according to one of the preceding claims,
**characterized in that**
the ratio of the spatial volume which is determined by the first region (50) between the wall (40) and solid electrolyte (30) to the spatial volume which is determined by the second region (60) between the wall (40) and solid electrolyte (30) is at most 60%, preferably at most 30%.

11. Electrochemical storage device according to one of the preceding claims,
**characterized in that**
at least one spring element (71) is arranged in the first region (50) between the wall (40) and solid electrolyte (30), which spring element is in contact with both the wall (40) and the solid electrolyte (30) but does not form a capillary zone in which the anode material in the liquid state of matter would be moved by capillary action between the solid electrolyte (30) and the spring element (71) to improve wetting of the solid electrolyte (30) at operating temperature.

12. Method for producing an electrochemical storage device (100), in particular an electrochemical storage device (100) according to one of the preceding claims, which method comprises the following steps:
- providing an ion-conductive solid electrolyte (30);
- providing a wall (40);
- forming the wall (40) and
- surrounding the solid electrolyte (30) with the formed wall (40) such that, on completion of the electrochemical storage device (100), there are provided between the wall (40) and solid electrolyte (30) at least one first region (50) of an anode compartment (11) and one second region (60) of an anode compartment (11), which two regions (50, 60) in each case differ by the spacing of the wall (40) from the solid electrolyte (30) in such a manner that the first region (50) is arranged closer to the bottom part (120) and the second region (60) is arranged closer to the top part (110) and in the second region (60) the wall (40) is spaced further from the solid electrolyte (30) than in the first region (50), and that the first region (50) has a substantially uniform spacing between the wall (40) and the solid electrolyte (30).

13. Method for producing an electrochemical storage device (100), in particular an electrochemical storage device (100) according to one of the preceding claims, which method comprises the following steps:
- providing a solid electrolyte (30) which has a change in shape (35) and is also ion-conductive;
- providing a wall (40);
- surrounding the solid electrolyte (30) with the wall (40) such that, on completion of the electrochemical storage device (100), there are provided between the wall (40) and solid electrolyte (30) at least one first region (50) of an anode compartment (11) and one second region (60) of an anode compartment (11), which two regions (50, 60) in each case differ by the spacing of the wall (40) from the solid electrolyte (30) in such a manner that the first region (50) is arranged closer to the bottom part (120) and the second region (60) is arranged closer to the top part (110) and in the second region (60) the wall (40) is spaced further from the solid electrolyte (30) than in the first region (50), and that the first region (50) has a substantially uniform spacing between the wall (40) and the solid electrolyte (30).

## Revendications

1. Dispositif ( 100 ) d'accumulation électrochimique, qui a, en fonctionnement régulier, un compartiment ( 11 ) anodique empli d'une matière ( 10 ) d'anode, ainsi qu'un compartiment ( 21 ) cathodique empli d'une matière ( 20 ) de cathode, le compartiment ( 11 ) anodique étant séparé du compartiment ( 21 ) cathodique par un électrolyte ( 30 ) solide conduisant les ions et dans lequel le compartiment ( 11 ) anodique est délimité d'un côté, au moins en partie, par l'électrolyte solide et d'un autre côté, au moins en partie, par une paroi ( 40 ) entourant, au moins en partie, l'électrolyte ( 30 ) solide, le dispositif ( 100 ) d'accumulation électrochimique ayant une partie ( 110 ) de tête où de l'énergie électrique peut être apportée et cédée, une partie ( 120 ) de pied montée en face de la partie ( 110 ) de tête et au moins une partie ( 130 ) latérale entourant la au moins une paroi ( 40 ) et disposée entre la partie ( 110 ) de tête et la partie ( 120 ) de pied, dans lequel il est constitué, entre la paroi ( 40 ) et l'électrolyte ( 30 ) solide, au moins une première région ( 50 ) et une deuxième région ( 60 ), lesquelles deux régions ( 50, 60 ) se distinguent par la distance respective de la paroi ( 40 ) à l'électrolyte ( 30 ) solide,
**caractérisé en ce que**
la première région ( 50 ) est disposée plus près de la partie ( 120 ) de pied et la deuxième région ( 60 ) est disposée plus près de la partie ( 110 ) de tête et, à la deuxième région ( 60 ), la paroi est à une distance plus grande de l'électrolyte ( 30 ) solide que dans la première région ( 50 ) et **en ce que** la première région ( 50 ) a une distance sensiblement uniforme de la paroi ( 40 ) à l'électrolyte ( 30 ) solide.

2. Dispositif d'accumulation électrochimique suivant la revendication 1,
**caractérisé en ce que**
la paroi ( 40 ) a une conformation ( 45 ), qui sépare l'une de l'autre la première région ( 50 ) et la deuxième région ( 60 ).

3. Dispositif d'accumulation électrochimique suivant l'une des revendications précédentes,
**caractérisé en ce que**
l'électrolyte ( 30 ) solide a une modification ( 35 ) de forme, qui sépare l'une de l'autre la première région ( 50 ) et la deuxième région ( 60 ).

4. Dispositif d'accumulation électrochimique suivant l'une des revendications précédentes,
**caractérisé en ce que**
le passage de la première région ( 50 ) à la deuxième région ( 60 ) a une diminution de la distance de la paroi à l'électrolyte solide.

5. Dispositif d'accumulation électrochimique suivant l'une des revendications précédentes,
**caractérisé en ce que**
la première région ( 50 ) et la deuxième région ( 60 ) sont à une distance différente, respectivement de la partie ( 110 ) de tête et de la partie ( 120 ) de pied.

6. Dispositif d'accumulation électrochimique suivant l'une des revendications précédentes,
**caractérisé en ce que**
la deuxième région ( 60 ) a une pluralité de diminutions de la distance de la paroi ( 40 ) à l'électrolyte solide et notamment la première région ( 50 ) a une distance sensiblement uniforme de la paroi ( 40 ) à l'électrolyte ( 30 ) solide.

7. Dispositif d'accumulation électrochimique suivant l'une des revendications précédentes,
**caractérisé en ce que**
la paroi ( 40 ) est entourée d'un godet ( 41 ), qui entoure, au moins en partie, l'électrolyte ( 30 ) solide.

8. Dispositif d'accumulation électrochimique suivant l'une des revendications précédentes,
**caractérisé en ce que**
la paroi ( 40 ) est à une distance de l'électrolyte ( 30 ) solide dans la première région ( 50 ) d'au plus 3 mm, d'une manière préférée d'au plus 1,5 mm

9. Dispositif d'accumulation électrochimique suivant l'une des revendications précédentes,
**caractérisé en ce que**
la paroi ( 40 ) est à une distance de l'électrolyte ( 30 ) solide dans la deuxième région ( 60 ), en moyenne d'au moins 4 mm, de préférence d'au moins 6 mm.

10. Dispositif d'accumulation électrochimique suivant l'une des revendications précédentes,
**caractérisé en ce que**
le rapport du volume, qui est défini par la première région ( 50 ) entre la paroi ( 40 ) et l'électrolyte ( 30 ) solide, au volume, qui est défini par la deuxième région ( 60 ) entre la paroi ( 40 ) et l'électrolyte ( 30 ) solide, est au plus de 60%, en étant de préférence au plus de 30%.

11. Dispositif d'accumulation électrochimique suivant l'une des revendications précédentes,
**caractérisé en ce qu'**
il est monté dans la première région ( 50 ), entre la paroi ( 40 ) et l'électrolyte ( 30 ) solide, au moins un élément ( 71 ) à ressort, qui est en contact à la fois avec la paroi ( 40 ) et l'électrolyte ( 30 ) solide, mais qui ne forme pas de zone capillaire dans laquelle la matière d'anode à l'état liquide serait, à la température de fonctionnement par un effet de capillarité entre l'électrolyte ( 30 ) solide et l'élément ( 71 ) à ressort, mise en mouvement pour un mouillage amélioré de l'électrolyte ( 30 ) solide.

12. Procédé de production d'un dispositif ( 100 ) d'accumulation électrochimique, notamment d'un dispositif ( 100 ) d'accumulation électrochimique suivant l'une des revendications précédentes, qui comprend les stades suivants :
- on se procure un électrolyte ( 30 ) solide conduisant les ions ;
- on se procure une paroi ( 40 ) ;
- on conforme la paroi ( 40 ) et
- on entoure l'électrolyte ( 30 ) solide de la paroi ( 40 ) conformée, de manière à former, entre la paroi ( 40 ) et l'électrolyte ( 30 ) solide, à la fabrication du dispositif ( 100 ) d'accumulation électrochimique, au moins une première région ( 50 ) d'un compartiment ( 11 ) anodique et une deuxième région ( 60 ) d'un compartiment ( 11 ) anodique, lesquelles deux régions ( 50, 60 ) se distinguent par la distance de la paroi ( 40 ) à l'électrolyte ( 30 ) solide, de manière à ce que la première région ( 50 ) soit plus près de la partie
( 120 ) de pied et la deuxième région ( 60 ) soit plus près de la partie ( 110 ) de tête et, pour la deuxième région ( 60 ), la paroi ( 40 ) est à une distance plus grande de l'électrolyte ( 30 ) solide que dans la première région ( 50 ) et en ce que la première région ( 50 ) a une distance sensiblement uniforme de la paroi ( 40 ) à l'électrolyte ( 30 ) solide.

13. Procédé de production d'un dispositif ( 100 ) d'accumulation électrochimique, notamment d'un dispositif ( 100 ) d'accumulation électrochimique suivant l'une des revendications précédentes, qui comprend les stades suivants :
- on se procure un électrolyte ( 30 ) solide ayant une variation ( 35 ) de forme ainsi que conduisant les ions ;
- on se procure une paroi ( 40 ) ;
- on entoure l'électrolyte ( 30 ) solide de la paroi ( 40 ), de manière à former, entre la paroi ( 40 ) et l'électrolyte ( 30 ) solide, à la fabrication du dispositif ( 100 ) d'accumulation électrochimique, au moins une première région ( 50 ) d'un compartiment ( 11 ) anodique et une deuxième région ( 60 ) d'un compartiment ( 11 ) anodique, lesquelles deux régions ( 50, 60 ) se distinguent par la distance de la paroi ( 40 ) à l'électrolyte ( 30 ) solide, de manière à ce que la première région ( 50 ) soit plus près de la partie ( 120 ) de pied et que la deuxième région ( 60 ) soit plus près de la partie ( 110 ) de tête et dans la deuxième région ( 60 ), la paroi ( 40 ) est à une distance plus grande de l'électrolyte ( 30 ) solide que dans la première région ( 50 ) et en ce que la première région ( 50 ) a une distance sensiblement uniforme de la paroi ( 40 ) à l'électrolyte ( 30 ) solide.
